(19) Europäisches Patentamt
European Patent Office
Office européen des brevets

(11) **EP 3 017 679 B1**

(12) **EUROPÄISCHE PATENTSCHRIFT**

(45) Veröffentlichungstag und Bekanntmachung des Hinweises auf die Patenterteilung:
**10.04.2019 Patentblatt 2019/15**

(51) Int Cl.:
***A01C 21/00*** *(2006.01)* ***A01C 17/00*** *(2006.01)*

(21) Anmeldenummer: **15401111.8**

(22) Anmeldetag: **30.10.2015**

(54) **VERFAHREN ZUR BESTIMMUNG DER GESCHWINDIGKEIT UND/ODER WURFWEITE VON ABGEWORFENEM STREUGUT SOWIE EINE VERTEILMASCHINE ZUR DURCHFÜHRUNG EINES SOLCHEN VERFAHRENS**

METHOD FOR DETECTING THE SPEED AND/OR THROW RADIUS OF EJECTED SPREAD GOODS, AND A DISTRIBUTION MACHINE FOR PERFORMING SUCH A METHOD

PROCÉDÉ DE DÉTERMINATION DE LA VITESSE ET/OU DE PORTÉE D'UN MATERIEL D'ÉPANDAGE ET ÉPANDEUR DESTINÉ À EXÉCUTER UN TEL PROCÉDÉ

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **04.11.2014 DE 102014116023**

(43) Veröffentlichungstag der Anmeldung:
**11.05.2016 Patentblatt 2016/19**

(73) Patentinhaber: **Amazonen-Werke H. Dreyer GmbH & Co. KG 49205 Hasbergen (DE)**

(72) Erfinder:
• **Rahe, Florian 49504 Lotte (DE)**
• **Wessels, Thomas 49080 Osnabrück (DE)**
• **Ströbel-Fröschle, Markus 49124 Georgsmarienhütte (DE)**

(56) Entgegenhaltungen:
**EP-A1- 2 756 745     EP-A2- 2 777 376
DE-A1- 19 723 359**

EP 3 017 679 B1

**Beschreibung**

Die Erfindung betrifft ein Verfahren zur Bestimmung der Geschwindigkeit und/oder Wurfweite abgeworfenem Streugut gemäß dem unabhängigen Patentanspruch 1 sowie eine Verteilmaschine zur Durchführung eines solchen Verfahrens gemäß dem unabhängigen Patentanspruch 10.

Schleuderstreuer, im Allgemeinen ausgebildet als Zentrifugalstreuer, welche typischerweise landwirtschaftliches Gut von zumindest einer, vorzugsweise zwei, Schleuderscheiben mittels auf den Schleuderscheiben angeordneten, typischerweise jeweils zwei, Wurfschaufeln verteilen sind seit geraumer Zeit Stand der Technik. Das Streugut wird mittels den auf der rotierenden Schleuderscheibe angeordneten Wurfschaufeln durch die auftretenden Zentrifugalkräfte in radialer Richtung beschleunigt und auf diese Weise verteilt. Die Wurfweite und Geometrie des Streufächers, also des Bereichs in dem das Streugut verteilt wird, hängt hierbei von verschiedensten Faktoren ab:

- Die Geometrie der Schleuderscheibe beeinflusst unter anderem den vertikalen Abwurfwinkel.
- Die Anordnung der Wurfschaufel auf der Schleuderscheibe sowie Länge und Geometrie der Wurfschaufel beeinflusst die Abwurfgeschwindigkeit und Flugrichtung (horizontalen Abwurfwinkel) des Streugutes.
- Die Beschaffenheit des Streugutes (Korngröße, Korngeometrie und Dichte) beeinflusst die Abwurfgeschwindigkeit und damit die Wurfweite.
- Der Auftreffpunkt des Streugutes auf der Schleuderscheibe beeinflusst die Abwurfgeschwindigkeit sowie den horizontalen Abwurfwinkel
- Die Schleuderscheibendrehzahl hat ebenso Auswirkungen auf die Abwurfgeschwindigkeit und die Abwurfwinkel

Die zunehmende Präzisierung in der Landtechnik, welche eine Vermeidung von Umweltbelastungen und unnötigen Kosten sowie Schonung von Ressourcen zum Ziel hat, verlangt nach immer detaillierteren Einstellmöglichkeiten der landtechnischen Maschinen. Für die Schleuderstreuer gilt entsprechend, dass nicht nur die Menge des aufgebrachten Streugutes, sowie die Schleuderscheibendrehzahl einstellbar sind. Vielmehr kann inzwischen auch der Auftreffpunkt des Streugutes auf die Schleuderscheibe sowie die Schleuderschaufelgeometrie angepasst werden. Auch spezielle Vorrichtungen zur Verteilung des Streugutes in Randbereichen einer landwirtschaftlichen Fläche sind bekannt.

Das Einstellen der verschiedenen Parameter erfolgt mit Hilfe von Tabellen, Formeln und/oder Graphen in denen in Abhängigkeit des Streuparameters, beispielsweise der Schleuderscheibendrehzahl für eine bestimmte Schleuderscheibe, Wurfschaufel und Aufgabepunkt, der mittlere horizontale Abwurfwinkel, also der Abwurfwinkel relativ zu einer Linie, welche vom Zentrum der Schleuderscheibe aus entgegen der Fahrtrichtung in radialer Richtung gezogen wird, und die mittlere Wurfweite angegeben ist. Genauso können Tabellen, Formeln und/oder Graphen vorliegen, für deren Erstellung andere Größen variiert, konstant gehalten und gemessen wurden (DE 36 17 377 C2, DE 33 10 424 C2).

Ebenso ist es Stand der Technik den Abwurfwinkel mittels Sensoren zu bestimmen und entsprechend obiger Tabellen, Formeln und/oder Graphen bei Abweichung zu einem vorgegebenen Sollwert Anpassungen an den genannten Parametern vorzunehmen (DE 38 87 218T2, DE 197 23 359 A1).

Ebenfalls offenbart ist eine solche Technik in der EP 2 777 376 A2, die zudem vorschlägt, weitere Parameter, welche insbesondere die Streuscheiben betreffen, bei der Einstellung des Düngerstreuers zu berücksichtigen, um die beabsichtigte Arbeitsbreite möglichst präzise einzustellen. Hierfür können überdies materialspezifische Parameter berücksichtigt werden, welche das Flugverhalten des Düngers charakterisieren.

Die direkte Bestimmung der Wurfweite mittels an der Verteilmaschine angeordneter Sensoren ist äußerst schwierig, da auf Grund des Verteilprozesses im Pflanzenbestand der Auftreffpunkt des Streugutes auf die Bodenoberfläche optisch nicht zugänglich ist bzw. oftmals durch die mehr oder weniger dicht stehenden Pflanzen abgeschattet wird.

Es hat sich daher gezeigt, dass eine indirekte Bestimmung der Wurfweite aus Flugparametern des Streugutes, insbesondere der Fluggeschwindigkeit und Flugrichtung, zur Bestimmung der Wurfweite geeigneter sind. Um aussagekräftige Vorhersagen über die Wurfweite treffen zu können sind neben Fluggeschwindigkeit und Position des Streugutes jedoch noch Informationen über die Flugeigenschaften des Streugutes, insbesondere der sogenannte K-Wert, welcher Auskunft über den Luftwiderstand bzw. Strömungswiderstand eines Teilchens gibt, notwendig (EP 2 756 745 A1).

Letzterer muss jedoch umständlich aus ballistischen Untersuchungen empirisch ermittelt werden und zwar individuell für jedes Streugut. Die K-Werte können je nach Material und Herstellungsart des Streugutes sehr stark variieren und sind zudem auch von der Größe bzw. Querschnittsfläche der Teilchen abhängig.

Daraus folgt, dass beispielsweise auf Grund von bekannten Entmischungseffekten von Schüttgütern, welche beispielsweise durch Erschütterungen beim Transport hervorgerufen werden, das gerade verteilte Streugut zu unterschiedlichen Zeitpunkten des Verteilprozesses unterschiedliche Korngrößen aufweisen kann. Würde also beispielsweise beim Hersteller oder Anbieter des Streugutes der K-Wert einer gut durchmischten Probe bestimmt, so kann beim Verbraucher des Streugutes durch Entmischungseffekte dieser K-Wert im Vergleich zu der gerade mit der Verteilmaschine ausgebrachten Menge Streugut zu groß oder zu klein sein. Selbst innerhalb der Verteilmaschine könnte sich, beispielsweise während einer längeren Straßenfahrt, das Streugut zu einem gewissen Grad entmischen.

Aufgabe der vorliegenden Erfindung ist es daher vorgenannte Probleme bei der Bestimmung der Flugweite der ausgebrachten Streugutpartikel zu lösen.

Dies wird durch ein Verfahren zur Steuerung einer Maschine zur Verteilung von landwirtschaftlichem Gut gemäß dem Anspruchs 1 erreicht, wobei zur Bestimmung des Geschwindigkeitsverlaufes während des Fluges und/oder der Flugbahn und/oder der Wurfweite ein zweiter Wert für die Geschwindigkeit herangezogen wird, welcher zu einem früheren oder späteren Zeitpunkt der Flugbewegung ermittelt wird. Auf diese Weise kann vorteilhaft die Wurfweite, welche sich beispielsweise aus der Änderung der Geschwindigkeit bei einer derartigen Flugbewegung bestimmen lässt, berechnet werden. Somit kann für die entsprechende abgeworfene Streugutmenge individuell die Flugbahn und/oder die Wurfweite und/oder der Geschwindigkeitsverlauf bestimmt werden, so dass Herstellerangaben über charakteristische, das Flugverhalten des Streugutes beschreibende Größen, wie K-Werte, für die Bestimmung der Flugweite nicht notwendig wären. Ein wiederholtes Anwenden des erfindungsgemäßen Verfahrens würde zudem Ungenauigkeiten bei der Einstellung der Flugweite auf Grund von Entmischungseffekten verhindern.

Des Weiteren wird die Aufgabe durch eine Verteilmaschine gemäß Anspruch 10 gelöst.

In einer vorteilhaften Weiterbildung der Erfindung vergrößert sich der Abstand der Streupartikel zum Sensor zum Zeitpunkt der Detektion. Da somit die Bewegungsrichtung der Streupartikel eine parallele Komponente zur Emissionsrichtung der durch den Sensor ausgesendeten Strahlen besitzt, kann die Geschwindigkeitsdetektion beispielsweise mittels des Dopplereffektes durchgeführt werden.

Weiter ist vorteilhaft, dass die Geschwindigkeitsmessung vorzugsweise in einem Abstand von 2 m bis 8 m von der Verteilmaschine (1) erfolgt, welcher sich dadurch auszeichnet, dass sich die Geschwindigkeit des Streugutes (10) gegenüber der Abfluggeschwindigkeit von der zumindest einen Schleuderscheibe (5) in messbarer Weise verringert hat, jedoch der Messbereich des Sensors (1) in diesem Abstand so fokussiert ist, dass die vermessenen Streupartikel (10) im Messbereich des Sensors (8) eine überwiegende Geschwindigkeitskomponente parallel zur Emissionsrichtung der elektromagnetischen Wellen oder Schallwellen des zumindest einen Sensors (8) und/oder parallel zur Verbindungslinie Sensor-Streupartikel im Messbereich des Sensors (8) besitzen.

Insbesondere beträgt der Abstand zwischen der Verteilmaschine und dem detektierten Streugut 2 m - 8 m, da sich in diesem Bereich das Flugverhalten des Streugutes nach dem Abwurf erfahrungsgemäß stabilisiert hat und außerdem der Messbereich des Sensors in diesem Abstand noch ausreichend fokussiert ist, so dass Störungen der Messung nicht zu erwarten sind.

In einer Weiterbildung der Erfindung wird für eine Detektion von Streupartikeln, welche eine überwiegende Geschwindigkeit senkrecht zur Emissionsrichtung der elektromagnetischen Wellen oder Schallwellen des zumindest einen Sensors auszeichnet, ein Korrekturfaktor und/oder eine Korrekturfunktion zur Berechnung der Geschwindigkeit der Streupartikel, welche im Speicher des Jobrechners hinterlegt oder im Auswerteprogramm enthalten ist, verwendet. Auf diese Weise können Fehler bei der Geschwindigkeitsmessung mittels Dopplereffekt, welche durch die Flugrichtung der Streupartikel relativ zur Emissionsrichtung der Strahlen des Detektors hervorgerufen werden, vermieden werden.

Erfindungsgemäß ist der zweite Wert der Geschwindigkeit die mittlere Abfluggeschwindigkeit des Streugutes von der zumindest einen Schleuderscheibe. Diese wird aus Streuparametern, wie vorzugsweise der Schleuderscheibengeometrie und/oder der Wurfschaufelgeometrie und/oder der Schleuderscheibendrehzahl und/oder der Fahrtgeschwindigkeit, und/oder Düngerparametern, wie vorzugsweise dem Rutschverhalten der Streupartikel auf der Schleuderscheibe und/oder in der Wurfschaufel, mit Hilfe einer im Speicher des Jobrechners hinterlegten oder im Auswerteprogramm enthaltenen mathematischen Funktion und/oder einer Tabelle und/oder eines Graphen bestimmt und aus der Differenz zur mittels der von zumindest einem Sensor, vorzugsweise einem Radarsensor, bestimmten Fluggeschwindigkeit in bekannter Entfernung von der zumindest einen Schleuderscheibe und/oder Wurfschaufel unter Berücksichtigung der Streuparameter und/oder Düngerparameter die mittlere Wurfweite und/oder die Flugbahn und/oder der Geschwindigkeitsverlauf durch Auswertung von hinterlegten Tabellen oder Funktionen bestimmt. Hierdurch kann in vorteilhafter Weise die Wurfweite des Streugutes bestimmt werden. Schon allein mit Hilfe der Schleuderscheiben- und Wurfschaufelgeometrie sowie Drehzahl ist wegen der dadurch bekannten Umfangsgeschwindigkeit der Schleuderscheibe und Wurfschaufel die Abwurfgeschwindigkeit der Streugutpartikel ungefähr bekannt, da diese für alle Streugüter bei gleicher Wurfschaufel, Schleuderscheibe und Drehzahl ungefähr gleich ist. Größere Genauigkeit lässt sich erreichen, indem insbesondere das Rutschverhalten des Düngers auf der Wurfschaufel- und Schleuderscheibe berücksichtigt wird. Wird nun zur Bestimmung eines zweiten Geschwindigkeitswertes in einiger Entfernung von der Schleuderscheibe ein Sensor, vorzugsweise ein Radarsensor, verwendet, so kann aus der Geschwindigkeitsdifferenz, bei bekanntem Abstand der Messpositionen, die Wurfweite, Flugbahn und/oder der Geschwindigkeitsverlauf vorhergesagt werden.

In einer vorteilhaften Weiterbindung der Erfindung werden die zur Bestimmung der Wurfweite verwendeten Tabellen und/oder Funktionen durch Laborversuche und/oder Feldversuche ermittelt.

In einer alternativen Ausgestaltung der Erfindung wird die mittlere Abfluggeschwindigkeit des Streugutes von der zumindest einen Schleuderscheibe aus Streuparametern, wie vorzugsweise der Schleuderscheibengeometrie und/oder der Wurfschaufelgeometrie und/oder der Schleuderscheibendrehzahl und/oder der Fahrtgeschwindigkeit, und/oder Düngerparametern, wie vorzugsweise dem Rutschverhalten der Streupartikel auf der Schleuderscheibe und/oder in der Wurfschaufel, mit Hilfe einer im Speicher des Jobrechners hinterlegten oder im Auswerteprogramm enthaltenen mathematischen Funktion und/oder einer Tabelle und/oder eines Graphen bestimmt und aus der Differenz zur mittels der von zumindest einem Sensor, vorzugsweise einem Radarsensor, bestimmten Fluggeschwindigkeit in bekannter Entfernung von der zumindest einen Schleuderscheibe und/oder Wurfschaufel unter Berücksichtigung der Streuparameter, wie vorzugsweise Schleuderscheibengeometrie und/oder Schleuderscheibendrehzahl ein das Flugverhalten beschreibender charakteristischer Wert K durch Auswertung von hinterlegten Tabellen oder Funktionen bestimmt. Auf diese Weise kann eine allgemeine, das Flugverhalten charakterisierende Größe K aus den bestimmten Parametern extrahiert werden.

In einer vorteilhaften Weiterbildung wird aus dem das Flugverhalten charakterisierenden Wert K mittels ballistischer Verfahren/Berechnungen die mittlere Wurfweite des Streugutes unter Berücksichtigung von Streuparametern berechnet.

Hierbei kann für die Berechnung folgende Differentialgleichung zu Grunde gelegt werden:

$$\ddot{\vec{x}} = -K \cdot \left( \dot{\vec{x}} + \vec{v}_{Wind} \right) \left| \dot{\vec{x}} + \vec{v}_{Wind} \right| - \vec{g} \ ,$$

wobei $\vec{x}$ die Position des Teilchens, $\vec{v}_{Wind}$ die Windgeschwindigkeit, welche im Rahmen dieser Formel vorteilhaft in die Berechnung einbezogen werden kann, $\vec{g}$ die Erdbeschleunigung und $K$ ein Faktor, der den Widerstand eines Teilchens in der Luft beschreibt, ist. Im Faktor $K$ wird unter anderem der Widerstandbeiwert des Teilchens berücksichtigt. $K$ hat folgende Form für ein Teilchen mit der Querschnittsfläche A und der Masse $m$

$$K = \frac{1}{2} \frac{c_w \rho_L A}{m}$$

Dabei ist $c_w$ der Widerstandbeiwert des Teilchens, $\rho_L$ die Dichte der Luft.
Es kann jedoch auch ein anderer Faktor als der hier eingeführte Faktor $K$ verwendet werden. Häufig wird die kugelförmige Grundform der Teilchen angenommen und ein Duchmesserfaktor q eingeführt, der die Abweichungen von der Kugelform berücksichtigt.

Die oben beschriebenen Differenzialgleichungen lassen sich numerisch integrieren und daraus die Flugbahn von Teilchen bestimmen. Daraus lässt sich überdies berechnen, wo ein Düngerkorn auf dem Feld landet.

In einer vorteilhaften Weiterbildung wird für die Bestimmung der mittleren Abfluggeschwindigkeit des Streugutes von der zumindest einen Schleuderscheibe und/oder Wurfschaufel ein das Rutschverhalten des Düngers charakterisierender Parameter aus der Schleuderscheibengeometrie und/oder der Schaufelgeometrie und/oder der Verweildauer des Düngers auf der Schleuderscheibe, welche durch die Position des Aufgabepunktes des Düngers auf die Schleuderscheibe, den Abwurfwinkel bezogen auf die Fahrtrichtung und die Schleuderschiebendrehzahl bestimmt ist, bestimmt. Somit kann das Rutschverhalten des Düngers, welches eine für jede Düngersorte charakteristische Größe darstellt, aus während des Verteilvorganges messbaren Größen bestimmt werden und muss nicht durch Laborversuche oder Herstellerangaben gewonnen werden.

In einer alternativen Ausgestaltung der Erfindung sind zumindest ein erster und zumindest ein zweiter Sensor derart angebracht, dass die zumindest überwiegende Anzahl der Partikel, welche den Messbereich des ersten Sensors passiert, zu einem später Zeitpunkt auch den Messbereich des zweiten Sensors passiert und unter Berücksichtigung eines Graphen und/oder einer mathematischen Funktion und/oder Tabelle, welche im Speicher des Jobrechners hinterlegt oder im Auswerteprogramm enthalten ist, wird die mittlere Wurfweite und oder mittlere Änderung der Geschwindigkeit der Partikel vorzugsweise unter Berücksichtigung der Flugeigenschaften und der Streuparameter, wie vorzugsweise Schleuderscheibengeometrie und/oder Schleuderscheibendrehzahl, bestimmt. Auf diese Weise kann eine Geschwindigkeitsmessung, vorzugsweise mittels Radarsensoren, derselben Streugutpartikel zu unterschiedlichen Zeitpunkten genutzt werden, um auf die Änderung der Geschwindigkeit zwischen diesen beiden Zeitpunkten und damit auf die Wurfweite zu schließen.

Dier Erfindung beinhaltet darüber hinaus einen unabhängigen Anspruch betreffend eine Verteilmaschine zur Durchführung des erfindungsgemäßen Verfahrens gemäß dem Oberbegriff von Patentanspruch 11, wobei zur Bestimmung des Geschwindigkeitsverlaufes während des Fluges und/oder der Flugbahn und/oder der Wurfweite ein zweiter Wert für die Geschwindigkeit der Streupartikel herangezogen wird, welcher zu einem früheren oder späteren Zeitpunkt der Flugbewegung ermittelt wird. Zudem werden weitere abhängige Weiterbildungen beansprucht.

Insbesondere wird in einer vorteilhaften Ausgestaltung der Erfindung eine Anordnung von Sensoren an der Verteilmaschine zur Bestimmung der Geschwindigkeit offenbart, welche einen vergleichsweise kleinen Öffnungswinkel, vorzugsweise kleiner 30°, aufweisen. Auf diese Weise lässt sich eine präzisere Geschwindigkeitsmessung erwarten, da lediglich Streupartikel in einem kleinen Bereich detektiert werden und beispielsweise divergierende Flugbahnen sich weniger stark auf das Ergebnis auswirken. Zudem ist mit einer abnehmenden Beeinflussung der Messergebnisse verschiedener Sensoren untereinander zu rechnen, da Störsignale so reduziert werden können.

Weitere Einzelheiten der Erfindung sind der Beispielsbeschreibung und den Zeichnungen zu entnehmen. Hierbei zeigen

Fig. 1 eine schematische Darstellung einer ersten Verteilmaschine bei der Verteilung von Streugut in verschiedenen Phasen und

Fig. 2 eine schematische Darstellung einer zweiten Verteilmaschine bei der Verteilung von Streugut in verschiedenen Phasen.

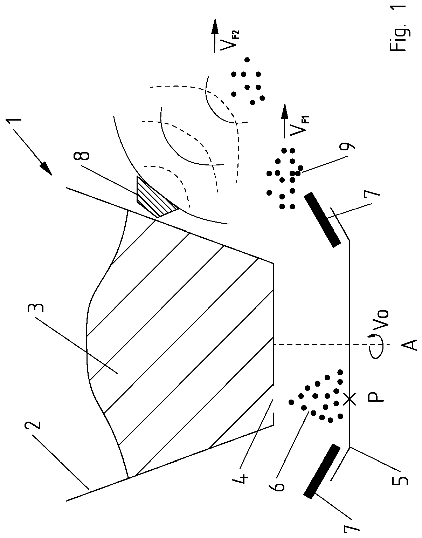

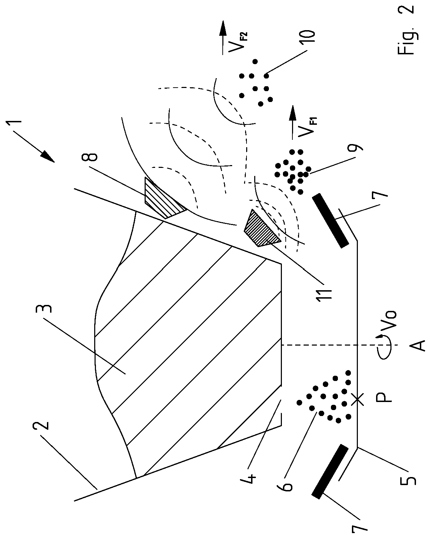

Das erfindungsgemäße Verfahren sowie mögliche bevorzugte Ausgestaltungen einer erfindungsgemäßen Verteilmaschine werden in schematischer Darstellung in den Fig. 1 und 2 dargestellt. Der Klarheit wegen wurden konstruktive Details, welche für die Darstellung der Erfindung unerheblich, für das Funktionieren der Verteilmaschine aber unerlässlich sind, weggelassen. Beispielsweise wird die Verteilmaschine normalerweise an eine nicht dargestellte landwirtschaftliche Zugmaschine in bekannter Weise angebaut oder als selbstfahrende Verteilmaschine betrieben. Zudem fehlt in den Figuren die Darstellung von beispielsweise einem Rührwerk für das Streugut und einem Dosierschieber, welcher die Menge des ausgebrachten Streugutes reguliert. Zudem ist die nicht erfindungswesentliche Steuerung des Auftreffpunktes des Streugutes auf die Schleuderscheibe nicht dargestellt. Weiter fehlt die mechanische Verbindung zwischen dem Streugutbehälter und der Schleuderscheibe, sowie deren Antrieb. Die Mehrzahl dieser konstruktiven Merkmale sind für die Funktion der Verteilmaschine obligatorisch, wurden aber der Klarheit der Darstellung wegen weggelassen und sind aus zahlreichen anderen Veröffentlichungen bekannt und offenbart.

Fig. 1 zeigt in schematischer Darstellung eine Verteilmaschine 1 mit einem Behälter 2, welcher Streugut 3 beherbergt. Letzteres fällt durch eine Öffnung 4 auf eine Streuscheibe 5. Das fallende Streugut ist in dieser Darstellung als Streugutpaket 6 dargestellt. Normalerweise rieselt das Streugut kontinuierlich auf die sich drehende Streuscheibe 5 und trifft auf die Scheibe am Punkt P auf. Zur besseren Veranschaulichung ist hier nur ein Düngerpaket 6 dargestellt, welches beispielsweise mittels einer der zwei Wurfschaufeln 7 während einer Umdrehung abgeworfen wird. Die Schleuderscheibe dreht sich um die Achse A mit der Drehzahl $v_D$ und verteilt das Streugut mittels der Wurfschaufeln 7 auf einer landwirtschaftlichen Fläche. Die Verweildauer des Streugutes auf der Schleuderscheibe hängt hierbei von der Geometrie der Scheibe sowie der Wurfschaufeln, der Drehzahl $v_D$, dem Aufgabepunkt des Streugutes auf die Schleuderscheibe sowie den Eigenschaften des verwendeten Streugutes ab.

Diese Parameter sind es auch, die die Abfluggeschwindigkeit des Streugutes von der Schleuderscheibe bestimmen. Hierbei ist zu erwähnen, dass die Rutscheigenschaften oftmals nicht hinreichend charakterisiert und damit bekannt sind. Es kann jedoch in guter Näherung davon ausgegangen werden, dass die Geschwindigkeit des Streugutes beim Verlassen der Schleuderscheibe 5 bzw. Wurfschaufeln 7 in guter Näherung für viele verschiedene Streugüter bei gleicher Schleuderscheibe, Wurfschaufel sowie Auftreffpunkt des Streugutes auf die Schleuderscheibe und Schleuderscheibendrehzahl gleich ist. Die Rutscheigenschaft des Streugutes, eine oftmals unbekannte Größe, kann daher für eine ausreichend präzise Berechnung der Wurfweite vernachlässigt bzw. bei konstanten Schleuderparametern als konstant angenommen werden. Letztere sind bekannt bzw. werden während des Verteilprozesses manuell oder automatisch reguliert und/oder gemessen. Für eine noch genauere Bestimmung kann zusätzlich in einem Laborversuch das Rutschverhalten des Streugutes bestimmt und für das erfindungsgemäße Verfahren berücksichtigt werden.

In einer späteren Phase des Verteilprozesses wird das Streugut von der Schleuderscheibe 5 abgeworfen und verlässt, nun als Streugutpaket 9 dargestellt, die Wurfschaufel bzw. die Schleuderscheibe. Die im Moment des Abwurfs vorliegende mittlere Fluggeschwindigkeit $v_{F1}$, kann nun aus der Schleuderscheibendrehzahl $v_D$, der Geometrie von Schleuderscheibe und Wurfschaufel und dem Auftreffpunkt sowie, falls vorhanden, aus dem Rutschverhalten des Streugutes ermittelt werden. Hierbei werden aus Laborversuchen gewonnene funktionale Zusammenhänge, Graphen oder Tabellen benötigt, welche jedoch, einmal ermittelt, für viele Streugüter angewendet werden können, ohne dass diese jeweils individuell in einem Laborversuch untersucht werden müssen. Dies basiert wie erwähnt auf der Annahme, dass für gleiche Schleuderparameter die Abfluggeschwindigkeit von der Schleuderscheibe für alle Streugüter ungefähr gleich ist. Alternativ kann wie bereits geschildert ein das Rutschverhalten charakterisierender Parameter, beispielsweise als Herstellerangabe, zur Erhöhung der Genauigkeit einbezogen werden.

In einer dritten Phase wird die im Vergleich zu $v_{F1}$ reduzierte Geschwindigkeit $v_{F2}$ des nun als Streugutpaket 10 dargestellten Streuguts mittels eines an der Verteilmaschine angebrachten Sensors 8, vorzugsweise eines Radarsensors gemessen. Dies geschieht vorzugsweise mit Hilfe des Dopplereffektes, also mittels Messung der geschwindigkeitsabhängigen Wellenlängenänderung der an den Streugutpartikeln reflektierten oder gestreuten elektromagnetischen Wellen. Aus der Differenz der Geschwindigkeiten $v_{F1}$ und $v_{F2}$ sowie den bekannten Positionen der Geschwindigkeitsmessung kann nun die Wurfweite bestimmt werden. Hierfür wird der Zusammenhang zwischen $v_{F1}$ und $v_{F2}$ und der Wurfweite aus Laborversuchen ermittelt. Der Vorteil des erfindungsgemäßen Verfahrens gegenüber dem Stand der Technik ist nun, dass die Eigenschaften des verwendeten Streugutes unbekannt sein können, da auch bei unbekannten Flugeigenschaften des Streugutes aus der Geschwindigkeitsdifferenz, die Wurfweite und/oder die Flugbahn und/oder der Geschwindigkeitsverlauf zumindest in guter Näherung bestimmt werden kann. Alternativ kann in vorteilhafter Weise der Faktor K, welcher die aerodynamischen Eigenschaften der Streugutpartikel bestimmt, ermittelt werden und daraus wiederum die Wurfweite.

Fig. 2 zeigt ein Verfahren die Wurfweite der Streugutpartikel zu bestimmen. Wiederum wird mittels einer Verteilmaschine 1 Streugut 3, welches sich in einem Behälter 2 befindet durch eine Öffnung 4 auf eine Schleuderscheibe 5 gegeben. Der Auftreffpunkt P des wiederum als Streugutpaket 6 dargestellten Streugutes wird hier als bekannt oder bestimmbar vorausgesetzt. Die Schleuderscheibe dreht sich um die Achse A mit der Drehzahl $v_D$. In dieser Ausgestaltung wird nun alternativ oder zusätzlich, zur Erhöhung der Genauigkeit der ermittelten Wurfweite, zu der in Fig. 1 vorgestellten Methode die Geschwindigkeit des die Schleuderscheibe 5 verlassenden Streugutes 10 mittels eines Sensors 11 gemessen. Wiederum handelt es sich hierbei vorzugsweise um einen oder mehrere Radarsensoren, welche vorzugsweise derart angeordnet sind, dass mittels des Dopplereffektes eine Geschwindigkeit $v_{F1}$ der Streugutpartikel 9 bestimmt werden kann. Analog zu der in Fig. 1 gezeigten Ausgestaltung werden nun dieselben Streugutpartikel, dargestellt als Streugutpaket 10, zu einem späteren Zeitpunkt den Messbereich des Sensors 8 passieren und einer zweiten Geschwindigkeitsmessung unterzogen werden, um $v_{F2}$ zu ermitteln. Wiederum kann nun aus der Differenz der Geschwindigkeitswerte und den bekannten Positionen der Geschwindigkeitsmessung die Wurfweite ermittelt werden.

Es können außerdem in vorteilhafter Weise ein oder mehrere vorhandene Sensoren, insbesondere Radarsensoren zur Bestimmung des horizontalen Abwurfwinkels verwendet werden, um eine Bestimmung der Fluggeschwindigkeit $v_{F1}$ oder $v_{F2}$ durchzuführen und daraus unter Berücksichtigung eines zweiten Wertes für die Geschwindigkeit, beispielsweise ermittelt mit Hilfe eines weiteren Sensors oder analog zu Fig. 1 über die bekannten Abmessungen sowie Aufgabepunkt auf die Schleuderscheibe und Drehzahl der Schleuderscheibe, die Wurfweite zu ermitteln. Insbesondere kann der zusätzlich gemessene horizontale Abwurfwinkel auch zu einer Präzisierung der Berechnung der Wurfweite herangezogen werden, beispielsweise zur Ermittlung der Verweildauer auf der Schleuderscheibe, um damit die Abwurfgeschwindigkeit von der Schleuderscheibe noch präziser zu berechnen.

Zudem soll der Vollständigkeit halber hier darauf verwiesen werden, dass es sich bei der Bestimmung der Geschwindigkeiten $v_{F1}$ und $v_{F2}$ vorzugsweise um die Bestimmung von mittleren Geschwindigkeiten handelt, da typischerweise die Anwendung des Dopplereffektes mittels Radarsensoren für alle sich im Fokus des Sensors befindlichen Partikel gilt, was ebenso zu einer Bestimmung einer mittleren Wurfweite führt.

Auch kann unter Berücksichtigung weiterer Daten und Parameter eine noch genauere Bestimmung der Wurfweite erreicht werden. Derartige Daten und Parameter beinhalten Wetterinformationen, insbesondere Windgeschwindigkeiten, welche an der Verteilmaschine oder Zugmaschine bestimmt oder drahtlos bereitgestellt sein können, darüber hinaus sind insbesondere Maschinenparameter, wie die Lage der Verteilmaschine, insbesondere Höhe und Neigung für die Berechnung der Wurfweite verwertbar. Letztere können wiederum durch Daten der Zugmaschine und/oder der Verteilmaschine bestimmt werden. Alternativ oder zusätzlich kann mittels drahtloser Sensoren, beispielsweise Ultraschallsensoren die Höhe der Verteilmaschine über dem Pflanzenbestand bestimmt werden. Auch eine Einbeziehung der Fahrtgeschwindigkeit, mittels bekannter Sensoren, beispielsweise GPS-Empfängern, an der Zugmaschine und/oder der Verteilmaschine ist denkbar und vorteilhaft.

**Patentansprüche**

1.   Verfahren zur Bestimmung der mittleren Wurfweite von mittels zumindest einer Wurfschaufeln (7) aufweisende Schleuderscheibe (5) einer landwirtschaftlichen Verteilmaschine (1) verteilten Streupartikel (6,9,10) eines Streugutes (3) mittels zumindest eines an der Verteilmaschine (1) angeordneten berührungslos arbeitenden Sensors (8), vorzugsweise Radarsensors, wobei der zumindest eine Sensor (8) derart angeordnet ist, dass die Emissionsrichtung der elektromagnetischen Wellen oder Schallwellen des zumindest einen Sensors (8) zumindest eine parallele Komponente zur Flugrichtung der Streupartikel (10) aufweist, welche sich im Messbereich des Sensors befinden, und aus den vom Sensor aufgenommenen Messwerten die Geschwindigkeit ($v_{F2}$) der Streupartikel (10) unter Ausnutzung des Dopplereffektes mittels eines in dem Speicher eines Jobrechners der Verteilmaschine (1) oder eines Zugfahrzeuges hinterlegten Auswerteprogramms bestimmt wird,

    **dadurch gekennzeichnet, dass**

    zur Bestimmung des Geschwindigkeitsverlaufes während des Fluges und/oder der Wurfweite ein zweiter Wert für die Geschwindigkeit ($v_{F1}$) der Streupartikel herangezogen wird, welcher zu einem früheren Zeitpunkt der Flugbewegung ermittelt wird, indem die im Moment des Abwurfs vorliegende mittlere Abfluggeschwindigkeit ($v_{F1}$) aus der Schleuderscheibendrehzahl ($v_D$), der Geometrie von Schleuderscheibe (5) und Wurfschaufel und dem Auftreffpunkt ermittelt wird und/oder die Geschwindigkeit

($v_{F1}$) des die Schleuderscheibe (5) verlassenden Streugutes (10) mittels eines zweiten Sensors (11) gemessen wird.

2. Verfahren nach Anspruch 1, **dadurch gekennzeichnet, dass** sich der Abstand der Streupartikel (10) zum Sensor (8) zum Zeitpunkt der Detektion vergrößert.

3. Verfahren nach Anspruch 1 oder 2, **dadurch gekennzeichnet, dass** für eine Detektion von Streupartikeln, welche eine überwiegende Geschwindigkeit senkrecht zur Emissionsrichtung der elektromagnetischen Wellen oder Schallwellen des zumindest einen Sensors auszeichnet, ein Korrekturfaktor und/oder eine Korrekturfunktion zur Berechnung der Geschwindigkeit der Streupartikel, welche im Speicher des Jobrechners hinterlegt oder im Auswerteprogramm enthalten ist, verwendet wird.

4. Verfahren nach zumindest einem der Ansprüche 1 - 3, **dadurch gekennzeichnet, dass** der zweite Wert der Geschwindigkeit die mittlere Abfluggeschwindigkeit ($v_{F1}$) des Streugutes (9) von der zumindest einen Schleuderscheibe (5) ist und diese aus Streuparametern, wie vorzugsweise der Schleuderscheibengeometrie und/oder der Wurfschaufelgeometrie und/oder der Schleuderscheibendrehzahl ($v_D$) und/oder der Fahrtgeschwindigkeit, und/oder Düngerparametern, wie vorzugsweise dem Rutschverhalten der Streupartikel (9) auf der Schleuderscheibe (5) und/oder in der Wurfschaufel (7), mit Hilfe einer im Speicher des Jobrechners hinterlegten oder im Auswerteprogramm enthaltenen mathematischen Funktion und/oder einer Tabelle und/oder eines Graphen bestimmt und aus der Differenz zur mittels der von zumindest einem Sensor (8), vorzugsweise einem Radarsensor, bestimmten Fluggeschwindigkeit ($v_{F2}$) in bekannter Entfernung von der zumindest einen Schleuderscheibe (5) und/oder Wurfschaufel (7) unter Berücksichtigung der Streuparameter und/oder Düngerparametern, die mittlere Wurfweite und/oder die Flugbahn und/oder der Geschwindigkeitsverlauf durch Auswertung von hinterlegten Tabellen oder Funktionen bestimmt wird.

5. Verfahren nach Anspruch 4, wobei die hinterlegten Tabellen und/oder Funktionen durch Laborversuche und/oder Feldversuche ermittelt werden.

6. Verfahren nach zumindest einem der Ansprüche 1 - 3, **dadurch gekennzeichnet, dass** der zweite Wert der Geschwindigkeit die mittlere Abfluggeschwindigkeit ($v_{F1}$) des Streugutes (9) von der zumindest einen Schleuderscheibe (5) ist und die mittlere Abfluggeschwindigkeit ($v_{F1}$) des Streugutes (9) von der zumindest einen Schleuderscheibe (5) aus Streuparametern, wie vorzugsweise der Schleuderscheibengeometrie und/oder der Wurfschaufelgeometrie und/oder der Schleuderscheibendrehzahl ($v_D$) und/oder der Fahrtgeschwindigkeit, und/oder Düngerparametern, wie vorzugsweise dem Rutschverhalten der Streupartikel (9) auf der Schleuderscheibe (5) und/oder in der Wurfschaufel (7), mit Hilfe einer im Speicher des Jobrechners hinterlegten oder im Auswerteprogramm enthaltenen mathematischen Funktion und/oder einer Tabelle und/oder eines Graphen bestimmt und aus der Differenz zur mittels der von zumindest einem Sensor (8), vorzugsweise einem Radarsensor, bestimmten Fluggeschwindigkeit ($v_{F2}$) in bekannter Entfernung von der zumindest einen Schleuderscheibe (5) und/oder Wurfschaufel (7) unter Berücksichtigung der Streuparameter, wie vorzugsweise Schleuderscheibengeometrie und/oder Schleuderscheibendrehzahl ($v_D$) ein das Flugverhalten beschreibender charakteristischer Wert K durch Auswertung von hinterlegten Tabellen oder Funktionen bestimmt wird.

7. Verfahren nach Anspruch 6 wobei aus dem das Flugverhalten charakterisierenden Wert K mittels ballistischer Verfahren/Berechnungen unter Berücksichtigung der Streuparameter, wie vorzugsweise Schleuderscheibengeometrie und/oder Schleuderscheibendrehzahl ($v_D$) die mittlere Wurfweite des Streugutes bestimmt wird.

8. Verfahren nach zumindest einem der vorangegangenen Ansprüche, **dadurch gekennzeichnet, dass** der zweite Wert der Geschwindigkeit die mittlere Abfluggeschwindigkeit ($v_{F1}$) des Streugutes (9) von der zumindest einen Schleuderscheibe (5) ist und für die Bestimmung der mittleren Abfluggeschwindigkeit ($v_{F1}$) des Streugutes von der zumindest einen Schleuderscheibe (5) und/oder Wurfschaufel ein das Rutschverhalten des Düngers charakterisierender Parameter aus der Schleuderscheibengeometrie und/oder der Schaufelgeometrie und/oder der Verweildauer des Düngers auf der Schleuderscheibe (5), welche durch die Position des Aufgabepunktes des Düngers (6) auf die Schleuderscheibe (5), den Abwurfwinkel bezogen auf die Fahrtrichtung und die Schleuderscheibendrehzahl ($v_D$) bestimmt ist, bestimmt wird.

9. Verfahren nach zumindest einem der vorangegangenen Ansprüche, **dadurch gekennzeichnet, dass** zumindest ein erster und zumindest ein zweiter Sensor (8,11) derart angebracht sind, dass die zumindest überwiegende Anzahl der Partikel (9), welche den Messbereich des ersten Sensors (11) passiert, zu einem späteren Zeitpunkt auch den Messbereich des zweiten Sensors (8) passiert und unter Berücksichtigung eines Graphen und/oder einer mathematischen Funktion und/oder Tabelle, welche im Speicher des Jobrechners hinterlegt oder im Auswerteprogramm enthalten ist, die mittlere Wurfweite und oder mittlere Änderung der Geschwindigkeit der Partikel vorzugsweise unter Berücksichtigung der Flugeigenschaften und der Streuparameter, wie vorzugsweise Schleuderscheibengeometrie und/oder Schleuderscheibendrehzahl ($v_D$), aus den Messdaten der beiden Sensoren (8,11) bestimmt wird.

10. Verteilmaschine (1) zur Durchführung des Verfahrens gemäß einem der vorstehenden Ansprüche zur Bestimmung der mittleren Wurfweite des Streugutes, wobei das Streugut von zumindest einer rotierenden, vorzugsweise zumindest eine Wurfschaufel aufweisende Schleuderscheibe (5) abgeworfen wird und zumindest ein berührungslos arbeitender Sensor (8), dessen Emissionsrichtung elektromagnetischer Wellen oder Schallwellen zumindest eine parallele Komponente zur Flugrichtung der Streupartikel aufweist, welche sich im Messbereich des Sensors (8) befinden, und aus den vom Sensor (8) aufgenommenen Messwerten die Geschwindigkeit ($v_{F2}$) der Streupartikel (10) unter Ausnutzung des Dopplereffektes mittels eines in dem Speicher eines Jobrechners der Verteilmaschine (1) oder eines Zugfahrzeuges hinterlegten Auswerteprogramms bestimmt wird, wobei das Auswerteprogramm derart konfiguriert ist, dass
zur Bestimmung des Geschwindigkeitsverlaufes während des Fluges und/oder der Wurfweite ein zweiter Wert für die Geschwindigkeit ($v_{F1}$) der Streupartikel herangezogen wird, welcher zu einem früheren Zeitpunkt der Flugbewegung ermittelt wird, indem die im Moment des Abwurfs vorliegende mittlere Abfluggeschwindigkeit ($v_{F1}$) aus der Schleuderscheibendrehzahl ($v_D$), der Geometrie von Schleuderscheibe (5) und Wurfschaufel und dem Auftreffpunkt ermittelt wird und/oder die Geschwindigkeit ($v_{F1}$) des die Schleuderscheibe (5) verlassenden Streugutes (10) mittels eines zweiten Sensors (11) gemessen wird.

11. Verteilmaschine (1) nach Anspruch 10, **dadurch gekennzeichnet, dass** der zweite Geschwindigkeitswert aus der Abwurfgeschwindigkeit ($v_{F1}$) des Streugutes von der Schleuderscheibe berechnet wird, welche vorzugsweise aus bekannten Streuparametern, wie vorzugsweise Schleuderscheibengeometrie und/oder Wurfschaufelgeometrie und/oder Schleuderscheibendrehzahl ($v_D$) und/oder Düngerparametern, wie vorzugsweise charakteristischen das Rutschverhalten des Streugutes auf der Wurfschaufel (7) und/oder das Flugverhalten des Streugutes beschreibenden Größen bestimmt wird.

12. Verteilmaschine (1) nach Anspruch 10, **dadurch gekennzeichnet, dass** zumindest ein erster und zumindest ein zweiter Sensor (8,11) derart angebracht sind, dass die zumindest überwiegende Anzahl der Partikel (9), welche den Messbereich des ersten Sensors (11) passiert, zu einem später Zeitpunkt auch den Messbereich des zweiten Sensors (8) passiert und unter Berücksichtigung eines Graphen und/oder einer mathematischen Funktion und/oder Tabelle, welche im Speicher des Jobrechners hinterlegt oder im Auswerteprogramm enthalten ist, die mittlere Wurfweite und oder mittlere Änderung der Geschwindigkeit der Partikel vorzugsweise unter Berücksichtigung der Flugeigenschaften und der Streuparameter, wie vorzugsweise Schleuderscheibengeometrie und/oder Schleuderscheibendrehzahl ($v_D$), aus den Messdaten der beiden Sensoren (8,11) bestimmt wird.

13. Verteilmaschine (1) nach zumindest einem der Ansprüche 10 bis 12, **dadurch gekennzeichnet, dass** der zumindest eine verwendete Sensor (8) zur Bestimmung der Geschwindigkeit einen vergleichsweise kleinen Öffnungswinkel, vorzugsweise kleiner 30°, hat.

**Claims**

1. Method for determining the average throwing range of spreading particles (6, 9, 10) of a spreading material (3) by means of at least one sensor (8), preferably a radar sensor, which operates in a contactless fashion and is arranged on an agricultural distribution machine (1), said spreading particles (6, 9, 10) being distributed by means of at least one centrifugal disc (5), having throwing blades (7), of said distribution machine (1), wherein the at least one sensor (8) is arranged in such a way that the emission direction of the electromagnetic waves or sound waves of the at least one sensor (8) has at least one parallel component with respect to the flying direction of the spreading particles (10) which are in the measuring range of the sensor, and the speed ($v_{F2}$) of the spreading particles (10) is determined from the measured values registered by the sensor, utilizing the Doppler effect by means of an evaluation program which is stored in the memory of a job computer of the distribution machine (1) or of a tractor vehicle, **characterized in that**
in order to determine the speed profile during the flight and/or the throwing range a second value is used for the speed ($V_{F1}$) of the spreading particles, which second value is determined at an earlier time of the flying movement **in that** the average launching speed ($V_{F1}$), present at the moment of ejection, is determined from the centrifugal disc rotational speed ($V_D$), the geometry of the centrifugal disc (5) and the throwing blade and the impact point, and/or the speed ($V_{F1}$) of the spreading material (10) which leaves the centrifugal disc (5) is measured by means of a second sensor (11).

2. Method according to Claim 1, **characterized in that** the distance between the spreading particles (10) and the sensor (8) increases at the time of the detection.

3. Method according to Claim 1 or 2, **characterized in that** a correction factor and/or a correction function for calculating the speed of the spreading particles, which function is stored in the memory of the job computer or in the evaluation program, is used for detecting the spreading particles, which detection distinguishes a predominant speed perpendicularly with the emission direction of the electromagnetic waves or sound waves of the at least one sensor.

4. Method according to at least one of Claims 1-3, **characterized in that** the second value of the speed is the average launching speed ($V_{F1}$) of the spreading material (9) from the at least one centrifugal disc (5), and said launching speed ($V_{F1}$) is determined from spreading parameters, such as preferably the centrifugal disc geometry and/or the throwing blade geometry and/or the centrifugal disc rotational speed ($V_D$) and/or the travel speed and/or fertilizer parameters, such as preferably the sliding behaviour of the spreading particles (9) on the centrifugal disc (9) and/or in the throwing blade (7), using a mathematical function which is stored in the memory of the job computer or contained in the evaluation program and/or a table and/or a graph, and the average throwing range and/or the flight path and/or the speed profile is determined from the difference with respect to the flying speed ($V_{F2}$), determined by at least one sensor (8), more preferably a radar sensor, at a known distance from the at least one centrifugal disc (5) and/or throwing blade (7) taking into account the spreading parameters and/or fertilizer parameters, by evaluating stored tables or functions.

5. Method according to Claim 4, wherein the stored tables and/or functions are obtained by means of laboratory tests and/or field tests.

6. Method according to at least one of Claims 1-3, **characterized in that** the second value of the speed is the average launching speed ($V_{F1}$) of the spreading material (9) from the at least one centrifugal disc (5), and the average launching speed ($V_{F1}$) of the spreading material (9) from the at least one centrifugal disc (5) is determined from spreading parameters, such as preferably the centrifugal disc geometry and/or the throwing blade geometry and/or the centrifugal disc rotational speed ($V_D$) and/or the travel speed and/or fertilizer parameters, such as preferably the sliding behaviour of the spreading particles (9) on the centrifugal disc (5) and/or in the throwing blade (7), using a mathematical function which is stored in the memory of the job computer or contained in the evaluation program and/or a table and/or a graph, and a characteristic value K, describing the flying behaviour, is determined from the difference with respect to the flying speed ($V_{F2}$), determined by at least one sensor (8), preferably a radar sensor, at a known distance from the at least one centrifugal disc (5) and/or throwing blade (7) taking into account the spreading parameters, such as preferably the centrifugal disc geometry and/or centrifugal disc rotational speed ($V_D$), by evaluating stored tables or functions.

7. Method according to Claim 6, wherein the average throwing range of the spreading material is determined from the value K, characterizing the flying behaviour, by means of ballistic methods/calculations taking into account the spreading parameters, such as preferably the centrifugal disc geometry and/or centrifugal disc rotational speed ($V_D$).

8. Method according to at least one of the preceding claims, **characterized in that** the second value of the speed is the average launching speed ($V_{F1}$) of the spreading material (9) from the at least one centrifugal disc (5), and, for the determination of the average launching speed ($V_{F1}$) of the spreading material from the at least one centrifugal disc (5) and/or throwing blade, a parameter which characterizes the sliding behaviour of the fertilizer is determined from the centrifugal disc geometry and/or the blade geometry and/or the time for which the fertilizer remains on the centrifugal disc (5), which time is determined by the position of the application point of the fertilizer (6) onto the centrifugal disc (5), the launching angle with respect to the direction of travel, and the centrifugal disc rotational speed ($V_D$).

9. Method according to at least one of the preceding claims, **characterized in that** at least a first and at least a second sensor (8, 11) are mounted in such a way that the at least predominant number of the particles (9) which passes through the measuring range of the first sensor (11) also passes through the measuring range of the second sensor (8) at a later time, and the average throwing range and/or average change in the speed of the particles is determined from the measurement data of the two sensors (8, 11) taking into account a graph and/or a mathematical function and/or a table which is stored in the memory of the job computer or is contained in the evaluation program, preferably taking into account the flying properties and the spreading parameters, such as preferably the centrifugal disc geometry and/or centrifugal disc rotational speed ($V_D$).

10. Distribution machine (1) for carrying out the method according to one of the preceding claims, for determining the average throwing range of the spreading material, wherein the spreading material is ejected by at least one rotating centrifugal disc (5), preferably having at least one throwing blade, and at least one sensor (8) which operates in a contactless fashion and whose emission direction of electromagnetic waves or sound waves has at least one parallel component with respect to the flying direction of the spreading particles which are located in the measuring range of the sensor (8), and the speed ($v_{F2}$) of the spreading particles (10) is determined from the measured values recorded by the sensor (8), using the Doppler effect by means of an evaluation program, stored in the memory of a job computer of the distribution machine (1) or of a tractor vehicle, wherein the evaluation program is configured in such a way that,

in order to determine the speed profile during the flight and/or the throwing range, a second value is used for the speed ($V_{F1}$) of the spreading particles, which second value is determined at an earlier time of the flying movement in that the average launching speed ($V_{F1}$) which is present at the moment of the ejection is determined from the centrifugal disc rotational speed ($V_D$), the geometry of the centrifugal disc (5) and the throwing blade and the impact point, and/or the speed ($V_{F1}$) of the spreading material (10) which leaves the centrifugal disc (5) is measured by means of a second sensor (11).

11. Distribution machine (1) according to Claim 10, **characterized in that** the second speed value is calculated from the ejection speed ($V_{F1}$) of the spreading material from the centrifugal disc, which launching speed ($V_{F1}$) is preferably determined from ? spreading parameters, such as preferably the centrifugal disc geometry and/or throwing blade geometry and/or centrifugal disc rotational speed ($V_D$) and/or fertilizer parameters, such as preferably characteristic variables which describe the sliding behaviour of the spreading material on the throwing blade (7) and/or the flying behaviour of the spreading materials.

12. Distribution machine (1) according to Claim 10, **characterized in that** at least one first and at least one second sensor (8, 11) are mounted in such a way that the at least predominant number of the particles (9) which passes through the measuring range of the first sensor (11), also passes through the measuring range of the second sensor (8) at a later time, and the average throwing range and/or average change in the speed of the particles is determined from the measurement data of the two sensors (8, 11), taking into account a graph and/or a mathematical function and/or a table which is stored in the memory of the job computer or contained in the evaluation program, preferably taking into account the flying properties and spreading parameters, such as preferably the centrifugal disc geometry and/or centrifugal disc rotational speed ($V_D$).

13. Distribution machine (1) according to at least one of Claims 10 to 12, **characterized in that** the at least one sensor (8) which is used for determining the speed has a comparatively small angle of aperture, preferably less than 30°.

**Revendications**

1. Procédé de détermination de la distance de projection moyenne de particules d'épandage (6, 9, 10) d'un produit à épandre (3), épandues au moyen d'au moins un disque centrifuge (5) présentant des aubes de projection (7) d'un épandeur agricole (1), au moyen d'au moins un capteur (8) fonctionnant sans contact, de préférence un capteur radar, disposé sur l'épandeur (1), dans lequel ledit au moins un capteur (8) est disposé de telle sorte que la direction d'émission des ondes électromagnétiques ou acoustiques dudit au moins un capteur (8) présente au moins une composante parallèle à la direction de vol des particules d'épandage (10), lesquelles particules d'épandage se trouvent dans la zone de mesure du capteur, et la vitesse ($v_{F2}$) des particules épandues (10) est déterminée à partir des valeurs de mesure acquises par le capteur à l'aide de l'effet Doppler au moyen d'un logiciel d'évaluation stocké dans la mémoire d'un ordinateur de tâches de l'épandeur (1) ou d'un véhicule tracteur,

**caractérisé en ce qu'**une seconde valeur de la vitesse ($v_{F1}$) des particules d'épandage, qui est déterminée à un instant antérieur du mouvement de vol, est utilisée pour déterminer la courbe de vitesse pendant le vol et/ou la distance de projection, en déterminant la vitesse de vol moyenne ($v_{F1}$) présente au moment de la projection à partir de la vitesse de rotation du disque centrifuge ($v_D$), de la géométrie du disque centrifuge (5) et de l'aube de projection et du point d'impact et/ou en mesurant la vitesse ($v_{F1}$) du produit à épandre (10) quittant le disque centrifuge (5) au moyen d'un second capteur (11).

2. Procédé selon la revendication 1,
**caractérisé en ce que** la distance entre les particules d'épandage (10) et le capteur (8) augmente à l'instant de la détection.

3. Procédé selon la revendication 1 ou 2,
**caractérisé en ce qu'**un facteur de correction et/ou une fonction de correction destiné(e) au calcul de la vitesse des particules d'épandage, qui est stocké(e) dans la mémoire de l'ordinateur de tâches ou est contenu(e) dans le logiciel d'évaluation, est utilisé(e) pour une détection de particules d'épandage, qui indique une vitesse prédominante perpendiculairement à la direction d'émission des ondes électromagnétiques ou des ondes acoustiques dudit au moins un capteur.

**4.** Procédé selon au moins l'une des revendications 1-3, **caractérisé en ce que** la seconde valeur de vitesse est la vitesse de vol moyenne ($v_{F1}$) du produit à épandre (9) dudit au moins un disque centrifuge (5) et est déterminée à partir de paramètres d'épandage tels que, de préférence, la géométrie du disque centrifuge et/ou la géométrie de l'aube de projection et/ou la vitesse de rotation du disque centrifuge ($v_D$) et/ou la vitesse de déplacement, et/ou à partir de paramètres de l'engrais tels que, de préférence, le comportement de glissement des particules d'épandage (9) sur le disque centrifuge (5) et/ou dans l'aube de projection (7), à l'aide d'une fonction mathématique et/ou d'une table et/ou d'un graphe stocké (es) dans la mémoire de l'ordinateur de tâches ou contenu(es) dans le logiciel d'évaluation, et **en ce que** la distance de projection moyenne et/ou la trajectoire de vol et/ou la courbe de vitesse est/sont déterminée(s) par évaluation de tables ou de fonctions stockées à partir de la différence par rapport à la vitesse ($v_{F2}$), déterminée au moyen d'au moins un capteur (8), de préférence un capteur radar, à une distance connue dudit au moins un disque centrifuge (5) et/ou de ladite au moins une aube de projection (7), en tenant compte des paramètres d'épandage et/ou de paramètres de l'engrais.

**5.** Procédé selon la revendication 4, dans lequel les tables et/ou fonctions stockées sont déterminées par des essais en laboratoire et/ou des essais sur le terrain.

**6.** Procédé selon au moins l'une des revendications 1-3, **caractérisé en ce que** la seconde valeur de la vitesse est la vitesse de vol moyenne ($v_{F1}$) du produit à épandre (9) dudit au moins un disque centrifuge (5) et **en ce que** la vitesse de vol moyenne ($v_{F1}$) du produit à épandre (9) dudit au moins un disque centrifuge (5) est déterminée à partir de paramètres d'épandage tels que, de préférence, la géométrie du disque centrifuge et/ou la géométrie de l'aube de projection et/ou la vitesse de rotation du disque centrifuge ($v_D$) et/ou la vitesse de déplacement, et/ou de paramètres de l'engrais tels que, de préférence, le comportement de glissement des particules d'épandage (9) sur le disque centrifuge (5) et/ou dans l'aube de projection (7), à l'aide d'une fonction mathématique et/ou d'une table et/ou d'un graphe stocké(es) dans la mémoire de l'ordinateur de tâches ou contenu(es) dans le logiciel d'évaluation, et **en ce qu'**une valeur caractéristique K décrivant le comportement de vol est déterminée par évaluation des tables ou fonctions stockées à partir de la différence par rapport à la vitesse de vol ($v_{F2}$) déterminée au moyen dudit au moins un capteur (8), de préférence un capteur radar, à une distance connue dudit au moins un disque centrifuge (5) et/ou de ladite au moins une aube de projection (7), en tenant compte des paramètres d'épandage tels que, de préférence, la géométrie des disques centrifuges et/ou la vitesse de rotation des disques centrifuges ($V_D$).

**7.** Procédé selon la revendication 6, dans lequel la distance de projection moyenne du produit à épandre est déterminée à partir de la valeur K caractérisant le comportement de vol au moyen de procédés/calculs balistiques tenant compte de paramètres d'épandage tels que, de préférence, la géométrie des disques centrifuges et/ou la vitesse de rotation des disques centrifuges ($v_D$).

**8.** Procédé selon au moins l'une des revendications précédentes, **caractérisé en ce que** la seconde valeur de la vitesse est la vitesse de vol moyenne ($v_{F1}$) du produit à épandre (9) dudit au moins un disque centrifuge (5) et **en ce que**, pour déterminer la vitesse de vol moyenne ($v_{F1}$) du produit à épandre dudit au moins un disque centrifuge (5) et/ou de ladite au moins une aube de projection, un paramètre caractérisant le comportement de glissement de l'engrais est déterminé à partir de la géométrie du disque centrifuge et/ou de la géométrie de l'aube de projection et/ou du temps de séjour de l'engrais sur le disque centrifuge (5), qui est déterminé par la position du point de délivrance de l'engrais (6) sur le disque centrifuge (5), l'angle de projection par rapport à la direction de déplacement et la vitesse de rotation du disque centrifuge ($v_D$).

**9.** Procédé selon au moins l'une des revendications précédentes, **caractérisé en ce qu'**au moins un premier et au moins un second capteur (8, 11) sont montés de telle sorte qu'au moins le nombre prédominant de particules (9) qui traversent la zone de mesure du premier capteur (11) traversent également à un instant ultérieur la zone de mesure du second capteur (8) et **en ce que** la distance de projection moyenne et/ou la variation moyenne de la vitesse des particules est déterminée à partir des données de mesure des deux capteurs (8, 11) en tenant compte d'un graphe et/ou d'une fonction mathématique et/ou d'une table stocké(es) dans la mémoire de l'ordinateur de tâches ou contenu(es) dans le logiciel d'évaluation, de préférence en tenant compte des propriétés de vol et des paramètres d'épandage tels que, de préférence, la géométrie des disques centrifuges et/ou la vitesse de rotation des disques centrifuges ($V_D$).

**10.** Épandeur (1) destiné à mettre en oeuvre le procédé selon l'une des revendications précédentes pour déterminer la distance de projection moyenne du produit à épandre, dans lequel le produit à épandre est projeté par au moins un disque centrifuge rotatif (5) comportant de préférence au moins une aube de projection, et comportant au moins un capteur (8) fonctionnant sans contact, dont la direction d'émission d'ondes électromagnétiques ou acoustiques présente au moins une composante parallèle à la direction de vol des particules d'épandage, lesquelles particules d'épandage se trouvent dans la zone de mesure du capteur (8), et la vitesse ($v_{F2}$) des particules d'épandage (10) est déterminée à partir des valeurs de mesure acquises par le capteur (8) à l'aide de l'effet Doppler au moyen d'un logiciel d'évaluation stocké dans la mémoire d'un ordinateur de tâches de l'épandeur (1) ou d'un véhicule tracteur, dans lequel le logiciel d'évaluation est configuré de telle sorte qu'une seconde valeur de la vitesse ($v_{F1}$) des particules d'épandage, qui est déterminée à un instant antérieur du mouvement de vol, est utilisée pour déterminer la courbe de vitesse pendant le vol et/ou la distance de projection, en déterminant la vitesse de vol moyenne ($v_{F1}$) présente au moment de la projection à partir de la vitesse de rotation du disque centrifuge ($v_D$), de la géométrie du disque centrifuge (5) et de l'aube de projection et du point d'impact et/ou en mesurant la vitesse ($v_{F1}$) du produit à épandre (10) quittant le disque centrifuge (5) au moyen d'un second capteur (11).

11. Épandeur (1) selon la revendication 10, **caractérisé en ce que** la seconde valeur de vitesse est calculée à partir de la vitesse de projection ($v_{F1}$) du produit à épandre du disque centrifuge, qui est de préférence déterminée à partir de paramètres d'épandage connus tels que, de préférence, la géométrie des disques centrifuges et/ou la géométrie de l'aube de projection et/ou la vitesse de rotation des disques centrifuges ($v_D$), et/ou à partir de paramètres de l'engrais tels que, de préférence, des grandeurs caractéristiques décrivant le comportement de glissement du produit à épandre sur l'aube de projection (7) et/ou le comportement de vol du produit à épandre.

12. Épandeur (1) selon la revendication 10, **caractérisé en ce qu'**au moins un premier et au moins un second capteur (8, 11) sont montés de telle sorte qu'au moins le nombre prédominant de particules (9) qui traversent la zone de mesure du premier capteur (11) traversent également à un instant ultérieur la zone de mesure du second capteur (8) et **en ce que** la distance de projection moyenne et/ou la variation moyenne de la vitesse des particules est déterminée à partir des données de mesure des deux capteurs (8, 11) en tenant compte d'un graphe et/ou d'une fonction mathématique et/ou d'une table stocké(es) dans la mémoire de l'ordinateur de tâches ou contenu(es) dans le logiciel d'évaluation, de préférence en tenant compte des propriétés de vol et des paramètres d'épandage tels que, la géométrie des disques d'épandage et/ou la vitesse de rotation des disques d'épandage ($v_D$).

13. Épandeur (1) selon au moins l'une des revendications 10 à 12, **caractérisé en ce que** ledit au moins un capteur (8) utilisé pour déterminer la vitesse présente un angle d'ouverture relativement petit, de préférence inférieur à 30°.

Fig. 1

Fig. 2

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 3617377 C2
- DE 3310424 C2
- DE 3887218 T2
- DE 19723359 A1
- EP 2777376 A2
- EP 2756745 A1